(19) **Europäisches Patentamt European Patent Office Office européen des brevets**

(11) **EP 3 650 762 B1**

(12) **FASCICULE DE BREVET EUROPEEN**

(45) Date de publication et mention de la délivrance du brevet:
**06.11.2024 Bulletin 2024/45**

(21) Numéro de dépôt: **19207924.2**

(22) Date de dépôt: **08.11.2019**

(51) Classification Internationale des Brevets (IPC):
**F24D 19/10** *(2006.01)*    **G05D 23/19** *(2006.01)*

(52) Classification Coopérative des Brevets (CPC):
**F24D 19/1048; F24D 19/1015; G05D 23/1917**

(54) **PROCÉDÉ DE CONTRÔLE D'UNE PUISSANCE THERMIQUE À INJECTER DANS UN SYSTÈME DE CHAUFFAGE ET SYSTÈME DE CHAUFFAGE METTANT EN OEUVRE CE PROCÉDÉ**

KONTROLLVERFAHREN EINER THERMISCHEN LEISTUNG ZUM EINSPRITZEN IN EIN HEIZSYSTEM, UND DIESES VERFAHREN NUTZENDES HEIZSYSTEM

METHOD FOR CONTROLLING A THERMAL POWER TO BE INJECTED IN A HEATING SYSTEM AND HEATING SYSTEM IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2018 FR 1860428**

(43) Date de publication de la demande:
**13.05.2020 Bulletin 2020/20**

(73) Titulaire: **Commissariat à l'Energie Atomique et aux Energies Alternatives 75015 Paris (FR)**

(72) Inventeurs:
- **VALLEE, Mathieu 38054 GRENOBLE (FR)**
- **BAVIERE, Roland 38054 GRENOBLE (FR)**

(74) Mandataire: **Cabinet Camus Lebkiri 25 rue de Maubeuge 75009 Paris (FR)**

(56) Documents cités:
**FR-A1- 2 964 727    FR-A1- 3 001 068 FR-A1- 3 061 268**

**Description**

## DOMAINE TECHNIQUE

La présente invention concerne un procédé pour contrôler la puissance thermique à injecter dans un système de chauffage d'un bâtiment afin d'optimiser les coûts de chauffage. L'invention concerne également un système de chauffage mettant en oeuvre ce procédé.

L'invention trouve des applications dans le domaine des systèmes de chauffage de bâtiments du secteur résidentiel ou du secteur tertiaire.

## ETAT DE LA TECHNIQUE

Il est connu que le chauffage d'un bâtiment est en général assuré par un système de chauffage comportant un système hydraulique de distribution de la chaleur, appelé circuit de chauffage, et une unité de production d'énergie thermique centralisée, appelée unité de production. Le circuit de chauffage, dans lequel circule un fluide caloporteur, par exemple de l'eau, comprend des émetteurs thermiques répartis dans le volume du bâtiment et reliés les uns aux autres par une tuyauterie. L'unité de production comporte un générateur d'énergie thermique qui fournit la chaleur au système et qui est relié à une ou plusieurs pompes de circulation de sorte à assurer la circulation de l'énergie thermique au sein du circuit de chauffage.

Les fabricants de systèmes de chauffage ont développé des systèmes de chauffage équipés d'un dispositif de régulation permettant de chauffer l'air interne du bâtiment à une température de consigne choisie par les occupants, appelée température de confort. Toutefois, la température de l'air à l'intérieur du bâtiment ne dépend pas que de la puissance de chauffage fournie par l'unité de production. En effet, la puissance de chauffage nominale $\Phi^*$ à fournir pour que l'air à l'intérieur du bâtiment soit à la température de confort $T_{conf}$ peut dépendre des conditions météorologiques, de la structure du bâtiment (isolation, capacité thermique), des habitudes des occupants, et de bien d'autres variables indépendantes du système de chauffage. Il est donc difficile de déterminer précisément, la puissance de chauffage nominale $\Phi^*$ à fournir.

Classiquement, les grandeurs régulées de manière centralisée sont la température de départ du circuit de chauffage $T_d$, c'est-à-dire la température du fluide caloporteur à l'entrée du circuit de chauffage, et la pression différentielle $\Delta P$ entre les bornes de sortie et d'entrée de la pompe de circulation. Dans la plupart des systèmes de chauffage hydrauliques actuels, les émetteurs thermiques sont équipés chacun d'un régulateur thermostatique assurant un contrôle individuel du débit circulant dans l'émetteur thermique auquel il est connecté, en fonction de la température ambiante locale et de son réglage propre. La puissance thermique $\Phi$ effectivement fournie par le système de chauffage résulte de ces différentes régulations et présente donc des variations importantes.

Dans le cas d'un système de chauffage hydraulique alimenté par un réseau d'énergie (par exemple un réseau de chaleur ou une pompe à chaleur connectée au réseau électrique), ce mode de régulation présente l'inconvénient de répercuter directement, sur le réseau, tous les appels de puissance des bâtiments, ce qui peut entraîner de forts pics de consommation. Pour répondre à ces pics de consommation, le fournisseur d'énergie doit dimensionner les installations de manière à pouvoir fournir la puissance maximale requise, ce qui représente de lourds investissements. De plus, les générateurs d'énergie thermique utilisés en période de pointe sont généralement des générateurs fonctionnant à base de combustibles fossiles, plus coûteux et fortement émetteurs de gaz à effet de serre. Des inconvénients similaires peuvent se poser pour tout système de chauffage pour lequel les prix de l'énergie sont variables au cours du temps, car les pics de prix ont généralement lieu en même temps que les pics de consommation.

Pour pallier à ces inconvénients, il a été proposé une réduction contrôlée de la puissance thermique $\Phi$ fournie à un bâtiment. Cette réduction contrôlée, appelée aussi délestage, propose de fournir une puissance thermique $\Phi$ inférieure à la puissance de chauffage nominale $\Phi^*$ pendant certaines périodes de temps. Lorsqu'il est appliqué à de nombreux bâtiments de manière coordonnée, le délestage permet de diminuer les pics de consommation, voire de les supprimer. Le délestage se traduit alors, en contrepartie, par une chute de la température à l'intérieur des bâtiments, qui doit elle aussi être contrôlée de manière à garantir le confort thermique des occupants. En règle générale, il apparait que le confort des occupants est peu influencé par la valeur instantanée de la puissance thermique $\Phi$ fournie par le système de chauffage en raison, notamment, de la présence d'éléments inertiels dans le système. Il existe donc une marge de manoeuvre non négligeable pour réguler la puissance thermique $\Phi$ de manière la plus économique possible.

Le document EP2021696 décrit un procédé destiné à coordonner le délestage de bâtiments pour réduire la consommation tout en garantissant le confort des occupants, c'est-à-dire avec une chute modérée de la température intérieure. La limitation de la chute de température est estimée à l'aide d'une constante de temps de l'inertie du bâtiment, déterminée a priori et vérifiée avec des capteurs de température placés à l'intérieur des bâtiments.

Le document EP2649379 décrit un procédé permettant de limiter la puissance fournie à un réseau de chaleur en planifiant la réduction de la demande (délestage) au niveau d'un ou plusieurs bâtiments. Cependant, ce procédé nécessite l'utilisation d'un capteur de température dans chacun des bâtiments afin de prévoir la puissance à fournir. Il ne décrit, en outre, pas le mode de régulation permettant de diminuer la puissance au niveau de chaque bâtiment et propose de fixer cette puissance à zéro, ce qui génère de fortes variations de la puissance fournie au bâtiment avec, en particulier, l'effet rebond intervenant après une coupure si aucune précaution particulière n'est prise.

Les procédés de réduction du chauffage décrits ci-dessus présentent l'inconvénient de nécessiter l'installation d'un ou de plusieurs capteurs de température à l'intérieur de chaque bâtiment. Il en découle de nombreuses contraintes comme, par exemple, les coûts d'installation et de maintenance, la nécessité de centraliser les données, le droit d'utilisation de ces données par un opérateur de réseau ou un fournisseur d'énergie.

D'autres documents proposent des procédés de délestage ne nécessitant pas l'installation de capteurs de températures supplémentaires. Par exemple, la demande de brevet FR201663218, déposée au nom de la demanderesse, et ayant comme numéro de publication FR3061268A1, décrit un procédé d'identification de la capacité de délestage dans lequel les mesures effectuées au niveau du circuit de chauffage en réponse à différentes perturbations imposées au système de chauffage sont analysées. Cependant, ce procédé n'exploite pas les informations disponibles sur le fonctionnement hydraulique.

Le document US2015102120 décrit un procédé permettant d'effectuer des réglages de la température de départ d'un circuit de chauffage hydraulique en tenant compte de la résistance hydraulique du circuit. Ce procédé propose de réduire la température de départ lorsque la résistance hydraulique est forte et de l'augmenter lorsque la résistance hydraulique est faible, ce qui permet d'éviter l'utilisation d'une température de départ inutilement élevée pour un générateur de type pompe à chaleur. Cependant, ce document ne décrit pas comment la corrélation entre la résistance hydraulique du circuit et la température intérieure peut être exploitée pour améliorer le modèle de fonctionnement d'un bâtiment et pour piloter le chauffage de manière optimale.

Il existe donc un réel besoin d'un procédé permettant de contrôler la puissance thermique injectée dans le circuit de chauffage d'un système de chauffage sans qu'il soit nécessaire de procéder à l'installation de capteurs de température dans les différentes parties du bâtiment.

## RESUME DE L'INVENTION

Pour répondre aux problèmes évoqués ci-dessus de régulation de la puissance thermique dans un système de chauffage hydraulique, le demandeur propose un procédé permettant de contrôler la puissance thermique injectée dans le circuit de chauffage au moyen de consignes de puissance planifiées en tenant compte des paramètres extérieurs au système de chauffage et lorsque le bâtiment abritant le système de chauffage ne dispose d'aucun capteur de température interne.

Selon un premier aspect, l'invention concerne un procédé de contrôle d'une puissance thermique à injecter dans un système de chauffage hydraulique d'un bâtiment, ledit système de chauffage comportant un générateur d'énergie thermique, un circuit de chauffage hydraulique dans lequel circule un fluide caloporteur, un système de contrôle apte à commander le générateur d'énergie thermique et comprenant un module de calcul de puissance, un module de calcul de conductance hydraulique, un module de planification de consignes de puissance à injecter et un module de régulation de la puissance injectée. Ce procédé comporte une pluralité d'étapes, mises en oeuvre durant au moins une première période :

a) choix, parmi différents modèles du système de chauffage dont un modèle liant la conductance hydraulique du circuit de chauffage calculée par le module de calcul de conductance hydraulique et la température à l'intérieur du bâtiment, d'un modèle de fonctionnement ou d'optimisation du système de chauffage à améliorer et choix, parmi différents objectifs, d'un objectif adapté pour définir le modèle choisi,

b) détermination, par le module de planification, de consignes de fonctionnement permettant de répondre à l'objectif choisi à l'étape a),

c) transmission des consignes de fonctionnement au module de régulation et application de ces consignes pendant toute la période et collecte de données de fonctionnement par les modules de calcul de puissance (131) et de conductance hydraulique (132),

d) analyse par le module de planification des données collectées pendant ladite période pour corriger au moins un paramètre du modèle choisi à l'étape a) et définir un modèle de fonctionnement amélioré.

Le fait d'appliquer, au système de chauffage hydraulique, pendant une période prédéterminée, des consignes de délestage déterminées en fonction d'un modèle de fonctionnement à améliorer, permet de modifier ledit modèle en fonction des paramètres extérieurs au système de chauffage. Il est ainsi possible de contrôler la puissance thermique à fournir au circuit de chauffage (appelé aussi circuit hydraulique) en tenant compte des paramètres extérieurs comme les conditions météorologiques et l'évolution des coûts de l'énergie et en l'absence de capteur de température interne dans le bâtiment. Ce procédé présente ainsi l'avantage d'exploiter des informations précises sur l'état thermique du bâtiment, grâce à la corrélation entre la conductance hydraulique du circuit de chauffage et la température à l'intérieur du bâtiment.

On entend par « système de chauffage », tout dispositif ou ensemble de dispositifs permettant de modifier - à la hausse ou à la baisse - la température de l'air à l'intérieur d'un bâtiment. Le système de chauffage peut donc chauffer l'air à l'intérieur du bâtiment ou, au contraire, le refroidir, la hausse ou la baisse de température dépendant de la température ambiante et de la température de confort choisie par les occupants du bâtiment.

De façon avantageuse, les étapes a) à d) sont réitérées pour au moins une deuxième période avec un deuxième objectif, différent de l'objectif de la première période, pour améliorer un modèle différent du modèle de la première période. Une telle réitération des étapes a) à d) permet d'affiner le modèle de fonctionnement et/ou d'optimisation.

Selon certains modes de réalisation, l'objectif est choisi à l'étape a) parmi les objectifs suivants :

- premier objectif : faire varier un état thermique du bâtiment et estimer les paramètres d'un modèle thermique dynamique du bâtiment ;
- deuxième objectif : faire varier un fonctionnement hydraulique du système de chauffage et estimer une corrélation entre la conductance hydraulique du circuit et la température à l'intérieur du bâtiment;
- troisième objectif : faire varier une charge au niveau du système de chauffage et optimiser les coûts de fonctionnement dudit système.

Le procédé de l'invention peut comporter une ou plusieurs des caractéristiques suivantes :

  ◦ l'ordre de mise en oeuvre des objectifs est choisi en fonction du modèle à améliorer prioritairement, le troisième objectif étant mis en oeuvre seul ou après le premier et/ou le deuxième objectif ;
  ◦ l'étape d) comporte une opération de corrélation à l'évolution de la conductance hydraulique du système de chauffage.

Selon un deuxième aspect, l'invention concerne un système de chauffage hydraulique pour bâtiment comportant :

- un circuit de chauffage hydraulique dans lequel circule un fluide caloporteur, ledit circuit de chauffage hydraulique reliant une pluralité d'émetteurs thermiques contrôlés individuellement par un régulateur thermostatique,
- un générateur d'énergie thermique assurant la circulation de l'énergie thermique au sein du circuit de chauffage,

le système de chauffage hydraulique étant caractérisé par le fait qu'il comporte un système de contrôle apte à mettre en oeuvre le procédé défini ci-dessus, ledit système de contrôle comprenant un module de calcul de puissance, un module de calcul de conductance hydraulique, un module de planification de consignes de puissance à injecter et un module de régulation de la puissance injectée.

Selon certains modes de réalisation, le système de chauffage hydraulique peut comporter une ou plusieurs des caractéristiques suivantes :

  ◦ le module de planification est connecté à au moins un capteur météorologique apte à fournir des données météorologiques.
  ◦ le module de planification est connecté à au moins une source d'informations météorologiques prévisionnelles.
  ◦ le module de planification est connecté à au moins une source d'informations relatives à l'évolution des coûts de l'énergie thermique utilisée dans ledit système de chauffage.
  ◦ le module de planification est connecté, en entrée, au module de calcul de puissance et au module de calcul de conductance hydraulique et, en sortie, au module de régulation de la puissance injectée.

Selon un troisième aspect, l'invention concerne un produit programme d'ordinateur comprenant des instructions qui conduisent le système de chauffage hydraulique défini ci-dessus à exécuter les étapes du procédé énoncées précédemment.

## BREVE DESCRIPTION DES FIGURES

D'autres avantages et caractéristiques de l'invention apparaîtront à la lecture de la description, illustrée par les figures dans lesquelles :

  La figure 1 montre une représentation schématique d'un bâtiment équipé d'un système de chauffage mettant en oeuvre le procédé de l'invention ;

La figure 2 représente, sous forme fonctionnelle, l'unité de production d'énergie thermique d'un système de chauffage mettant en oeuvre le procédé de l'invention ;

La figure 3 représente, sous forme fonctionnelle, le système de contrôle du système de chauffage mettant en oeuvre le procédé de l'invention ;

La figure 4 représente le diagramme fonctionnel des différentes étapes du procédé selon l'invention ;

La figure 5 représente un exemple de graphique utilisé pour construire un modèle de fonctionnement avec le procédé de l'invention.

## DESCRIPTION DETAILLEE D'AU MOINS UN MODE DE REALISATION

Un exemple de réalisation d'un procédé de contrôle de la puissance thermique injectée dans un circuit de chauffage hydraulique et d'un système de chauffage hydraulique mettant en oeuvre ce procédé sont décrits en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

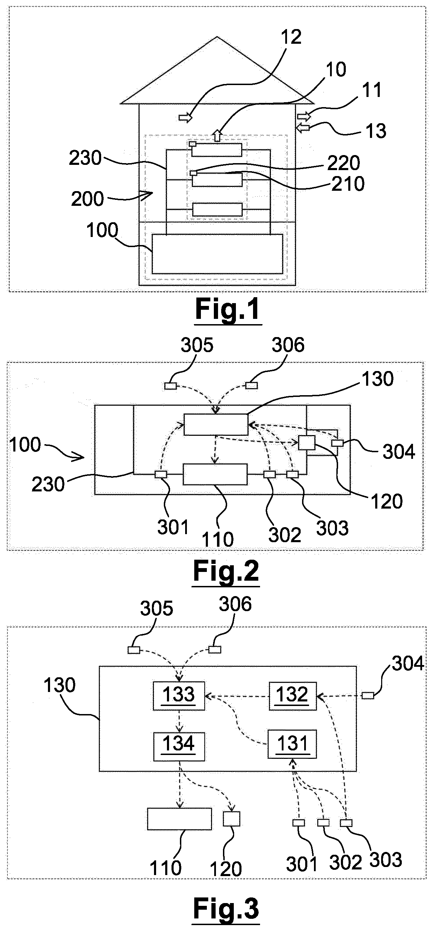

Un exemple d'un bâtiment équipé d'un système de chauffage hydraulique, dans lequel le procédé de l'invention est mis en oeuvre, est représenté schématiquement sur la figure 1. Ce système de chauffage hydraulique, appelé par la suite simplement système de chauffage, comprend une unité de production d'énergie thermique 100, ou unité de production, et un circuit de chauffage 200. Ce circuit de chauffage 200 comporte plusieurs émetteurs thermiques 210, comme par exemple des radiateurs, connectés les uns aux autres par une tuyauterie 230, cette tuyauterie 230 reliant également le circuit de chauffage à l'unité de production 100. L'unité de production 100 comporte, comme décrit plus en détail par la suite, un générateur d'énergie thermique 110 (par exemple une chaudière) relié à au moins une pompe de circulation 120 pour assurer la circulation du fluide caloporteur à l'intérieur du circuit de chauffage 200 et, en particulier, dans chaque émetteur thermique 210. Au moins une partie des émetteurs thermiques 210 sont équipés d'un régulateur thermostatique 220, ce régulateur thermostatique assurant un contrôle individuel de la puissance thermique émise par l'émetteur thermique auquel il est connecté.

Ainsi, chaque émetteur thermique 210 reçoit l'énergie thermique contenue dans le circuit de chauffage 200 et transmet cette énergie vers l'air de la pièce du bâtiment dans laquelle il se trouve, de manière à maintenir une température intérieure $Tint$ proche de la température de confort $Tconf$ choisie par les occupants du bâtiment.

De manière générale, la température intérieure $Tint$ du bâtiment résulte d'un équilibre énergétique mettant en relation :

- le flux d'énergie 10 correspondant à la puissance $\Phi_{rad}$ fournie par l'ensemble des émetteurs thermiques 210 ;
- le flux d'énergie 11 correspondant aux pertes thermiques avec l'extérieur $\Phi_{perte}$ ;
- le flux d'énergie 12 correspondant aux apports internes $\Phi_{ai}$ provoqués par la présence des occupants, l'utilisation d'appareil électriques dégageant de la chaleur, etc ...
- le flux d'énergie 13 correspondant à la contribution météorologique comme, par exemple, les apports solaires $\Phi_{as}$ ;

les puissances étant exprimées en Watt, les énergies en Joules et les températures en degrés Celsius.

Lorsque la température de confort est respectée, alors $Tint \approx Tconf$ et la puissance $\Phi_{rad}$ fournie par les émetteurs correspond à la puissance de chauffage nominale $\Phi^*$ à fournir définie précédemment, de sorte que le bâtiment est maintenu énergétiquement à l'équilibre.

Pour permettre la mise en oeuvre du procédé de l'invention, l'unité de production 100 comporte un système de contrôle 130, connecté au générateur d'énergie thermique 110 et à au moins une pompe de circulation 120, comme représenté sur la figure 2. Le système de contrôle 130 est en outre connecté à une pluralité de capteurs et/ou dispositifs internes et externes au système de chauffage. Le système de contrôle 130 reçoit en particulier des données relatives au système de chauffage et mesurées par les capteurs internes suivants :

- un capteur de température de départ 301 qui mesure la température de départ $T_d$ du circuit de chauffage 200, c'est-à-dire la température du fluide caloporteur à la sortie du générateur d'énergie thermique 110,
- un capteur de température de retour 302 qui mesure la température de retour du circuit de chauffage, c'est-à-dire la température du fluide caloporteur en sortie de circuit de chauffage 200,
- un capteur de débit 303 qui mesure le débit du fluide caloporteur dans le circuit de chauffage 200, et
- un capteur de pression différentielle 304 qui mesure la pression différentielle dans le circuit de chauffage, aux bornes de la pompe de circulation 120.

Le système de contrôle 130 reçoit en outre des données extérieures au système de chauffage, fournies par les dispositifs externes suivants :

- un ou plusieurs capteurs météorologiques 305 fournissant des informations sur les conditions météorologiques, et
- une ou plusieurs sources d'informations 306 fournissant des informations de prévisions des conditions météorologiques et des informations d'évolution des coûts de l'énergie.

De façon plus précise, et comme représenté sur la figure 3, le système de contrôle 130 comporte un module de calcul de puissance 131 qui calcule la puissance thermique $\Phi$ fournie par le générateur d'énergie thermique 110 à partir des mesures des capteurs de température aller 301 et retour 302 et du capteur de débit 303. Le système de contrôle 130 comporte également un module de calcul de conductance hydraulique 132 qui calcule la conductance hydraulique du circuit de chauffage à partir des mesures du capteur de pression différentielle 304 et du capteur de débit 303. Il comporte en outre un module 133 de planification des consignes de puissance à injecter, ce module de planification assurant la planification des consignes de puissance thermique $\Phi$ à injecter dans le système de chauffage, en fonction des informations fournies par les modules de calcul de puissance 131 et de conductance hydraulique 132 et par les capteurs météorologiques 305 et les sources d'informations 306. Enfin, le système de contrôle 130 comporte un module 134 de régulation de la puissance injectée, ce module 134 recevant une consigne du module de planification 133 et agissant sur la consigne de température de départ $T_d$ du générateur d'énergie thermique 110 et, éventuellement, sur la consigne de différence de pression $\Delta P$ de la pompe de circulation 120, de sorte à assurer la régulation de la puissance thermique $\Phi$ injectée dans le circuit de chauffage 200.

Le système de contrôle 130 décrit précédemment permet de mettre en oeuvre le procédé de l'invention qui va maintenant être décrit. En effet, le système de chauffage de l'invention est adapté pour fonctionner dans deux modes différents : un mode dit « normal » où la puissance thermique est injectée en fonction de paramètres prédéfinis d'un modèle prédéfini et un mode de planification pendant lequel la puissance thermique est injectée en fonction de consignes transmises par le module de planification 133.

Le procédé selon l'invention a notamment pour but de mettre à jour les modèles de fonctionnement du système de chauffage. On appelle « modèle de fonctionnement du système de chauffage », un modèle thermique dynamique du bâtiment (appelé modèle de fonctionnement du bâtiment) et une corrélation entre la conductance hydraulique du circuit hydraulique et la température à l'intérieur du bâtiment (appelé modèle de fonctionnement du circuit de chauffage). Le procédé de l'invention a également pour but de mettre à jour le modèle d'optimisation des coûts de fonctionnement. On appellera par la suite indifféremment « modèle », les modèles de fonctionnement et le modèle d'optimisation.

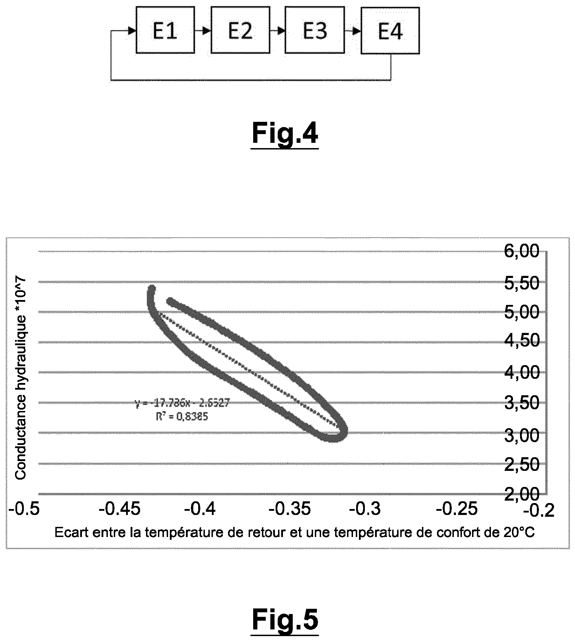

Le procédé de l'invention est mis en oeuvre lorsque le système de chauffage est en mode de planification. Il comporte au moins quatre étapes représentées de façon fonctionnelle sur la figure 4 par les blocs E1 à E4. Ces étapes peuvent être mises en oeuvre une première fois, pour une première période. L'ensemble des étapes E1 à E4 peut être réitéré plusieurs fois, pendant des deuxième et/ou troisième périodes, différentes de la première période.

On appelle « période » une durée temporelle pendant laquelle les étapes E1 à E4 sont mises en oeuvre. Cette durée temporelle peut être de quelques minutes ou de quelques heures. La durée de chaque période est définie en fonction de l'objectif, indépendamment des autres périodes. Par exemple, la première période peut s'étendre sur N1 heures d'une première journée, la deuxième période sur N2 heures d'une deuxième journée et la troisième période sur N3 heures d'une troisième journée, les durées N1, N2 et N3 pouvant être différentes les unes des autres. Les première, deuxième et/ou troisième périodes peuvent s'étendre sur plusieurs journées. Elles peuvent, en variante, s'étendre sur une seule journée dès lors que le cumul des périodes de délestage (étapes E3 du procédé) ne risque pas de rendre la température intérieure du bâtiment inconfortable pour ses occupants.

La durée temporelle de chaque période peut être une durée continue s'étendant, par exemple, de l'heure H à l'heure H+N, où N est la durée temporelle de la période. La durée temporelle d'une période peut également être une durée discontinue s'étendant, par exemple, de l'heure H à l'heure H+N puis de l'heure h à l'heure h+n, où N+n est la durée temporelle de la période.

Dans le procédé de la figure 4, la première étape (bloc E1) consiste à déterminer, parmi les différents modèles du système de chauffage, celui à améliorer en priorité. L'étape E1 consiste aussi à choisir l'objectif adapté au modèle choisi. Dans certains modes de réalisation, trois objectifs permettent de définir trois modèles. Ces objectifs sont les suivants :

- Premier objectif : faire varier l'état thermique du bâtiment, de manière à pouvoir estimer les paramètres d'un modèle thermique dynamique du bâtiment (ou modèle de fonctionnement du bâtiment) ;
- Deuxième objectif : faire varier le fonctionnement hydraulique du circuit de chauffage, de manière à estimer une corrélation entre la conductance hydraulique du circuit hydraulique et la température à l'intérieur du bâtiment (ou modèle de fonctionnement du circuit de chauffage) ; et

- Troisième objectif : faire varier la charge au niveau de l'unité de production 100, de manière à optimiser les coûts de fonctionnement du système de chauffage (ou modèle d'optimisation des coûts).

Le choix de l'objectif est défini en fonction des priorités établies, la priorité dépendant notamment de l'écart constaté entre les modèles dits antérieurs, c'est-à-dire les modèles préalablement établis pour le système de chauffage (modèle de fonctionnement du bâtiment et/ou modèle de fonctionnement du circuit de chauffage et/ou modèle d'optimisation des coûts) et le fonctionnement réel dudit système.

Selon certains modes de réalisation, les étapes E1 à E4 du procédé sont réitérées au moins deux fois, avec un objectif différent à chaque réitération, le troisième objectif étant nécessairement mis en oeuvre au moins une fois. Au début de la mise en oeuvre du procédé, puisque les modèles de fonctionnement ne sont généralement pas encore calibrés, les premier et/ou deuxième objectifs sont appliqués en priorité. Dans ces modes de réalisation, l'ordre de mise en oeuvre des objectifs est choisi en fonction du modèle à améliorer prioritairement, le troisième objectif étant toujours mis en oeuvre lorsque la précision des modèles de fonctionnement est jugée suffisante.

Dans le procédé de la figure 4, l'étape E2 consiste à déterminer les consignes de fonctionnement du système de chauffage, appelées aussi consignes de délestage, permettant de répondre à l'objectif choisi à l'étape E1. Cette étape E2 est réalisée par le module 133 de planification qui calcule les réductions de chauffage possibles permettant de répondre à l'objectif choisi. Par exemple, si l'objectif choisi est le premier objectif, alors le module 133 de planification détermine les consignes qui permettent de faire varier l'état thermique du bâtiment tout en respectant au mieux la température de confort définie par les occupants. En particulier, si la précision du modèle de fonctionnement choisi est faible, ces consignes sont calculées de manière conservatives, de sorte à minimiser le risque d'une trop forte chute de température à l'intérieur du bâtiment.

Dans l'étape E3 du procédé de la figure 4, le module 133 de planification transmet les consignes de délestage déterminées à l'étape E2 au module 134 de régulation, qui commande le générateur d'énergie thermique 110 et la pompe de circulation 120 afin que lesdites consignes soient appliquées. Le générateur d'énergie thermique 110 et la pompe de circulation 120 injectent, dans le circuit de chauffage 200, une puissance thermique régulée, correspondant aux consignes de délestage. Pendant la période d'application des consignes de délestage, les données de fonctionnement sont mesurées par les capteurs 301 à 304 et collectées, en particulier, par les modules de calcul de puissance 131 et de conductance hydraulique 132.

Dans l'étape E4 du procédé de la figure 4, le module 133 de planification analyse les données collectées pendant la période de délestage pour corriger les paramètres du modèle de fonctionnement choisi à l'étape E1, c'est-à-dire pour corriger les paramètres de la corrélation du circuit de chauffage ou du modèle thermique dynamique du bâtiment. Le modèle de fonctionnement avec les paramètres corrigés est appelé modèle de fonctionnement amélioré. Une étape préalable de calibrage de la corrélation peut être appliquée, notamment lors des premières utilisations du système de chauffage.

Après l'étape E4, le procédé peut recommencer à l'étape E1. Selon les cas, il est possible de repasser dans le mode « normal », dans lequel le procédé n'est pas mis en oeuvre pendant une certaine période, ou bien de poursuivre la mise en oeuvre du procédé sur la période suivante. Dans ce second cas, le choix de l'objectif à poursuivre est déterminé à l'étape E1 comme décrit précédemment. Si la précision du modèle amélioré n'est pas satisfaisante, le procédé est recommencé avec une réestimation, par le module 133 de planification, des paramètres du modèle de fonctionnement. Si cette précision est satisfaisante, alors le procédé est réitéré pour un modèle différent, avec un objectif différent.

La mise en oeuvre du procédé de l'invention, dans un exemple d'application à un bâtiment muni d'un système de chauffage hydraulique, va maintenant être décrite. Dans cet exemple, le procédé est mis en oeuvre par le module de planification 133 au cours de trois périodes de 24h successives pour un modèle thermique dynamique du bâtiment composé d'une résistance $R_{bat} = 1/U_{bat}$ et d'une capacité thermique $I_{bat}$ caractérisant l'enveloppe du bâtiment, ainsi que d'une capacité thermique $I_c$ caractérisant le circuit hydraulique. L'homme du métier comprendra que d'autres modèles thermiques dynamiques du bâtiment peuvent bien entendu être considérés, notamment des modèles plus élaborés.

Dans cet exemple, le système de chauffage est dans un état d'origine dans lequel certains éléments des modèles ont déjà pu être estimés, par exemple par la mise en oeuvre d'un procédé tel que celui décrit dans le document FR1663218. L'état d'origine peut, par exemple être le suivant :

- La conductance thermique du bâtiment $U_{bat}$ a été estimée à 594 W/K (soit une résistance thermique R1 de $1.68^{e}$-3 K/W), par exemple par un calcul simple à partir de la puissance moyenne consommée, de la température moyenne extérieure et d'une hypothèse de température interne à 20°C ;
- La capacité thermique du circuit de chauffage $I_c$ a pu être estimée à $5.28^{e}5$ J/K, par exemple en imposant un créneau de température de départ du circuit de chauffage, et en comparant l'énergie injectée dans le système de chauffage à l'énergie qui aurait dû être injectée si la température de départ était restée constante ; et

- La capacité thermique du bâtiment $I_{bat}$ a pu être estimée à $3,2^{e}7$ J/K par exemple en considérant une constante de temps $\tau = I_{bat}/U_{bat}$ typique selon le type de bâtiment considéré (par exemple de 15h).

On considère, par ailleurs, un modèle liant la conductance hydraulique du réseau et la température à l'intérieur du bâtiment. Si on note *CHyd* la conductance hydraulique de l'ensemble formé du circuit hydraulique et des émetteurs, alors *CHyd* peut être définie comme le ratio entre le débit massique mesuré au niveau de la pompe de circulation et la

$$CHyd = \frac{\dot{m}^2}{\Delta P}$$

pression différentielle mesurée entre les bornes de ladite pompe de circulation : où $\dot{m}^2$ est le débit massique au carré et $\Delta$P la pression différentielle.

En supposant que les émetteurs sont équipés de régulateurs thermostatiques, tels que des robinets thermostatiques, agissant comme des vannes qui s'ouvrent et se ferment en fonction des variations entre la température interne du bâtiment, notée *Tint,* et la température de confort, notée *Tconf,* qui est le niveau de température au-delà duquel le régulateur thermostatique est pleinement fermé. Ces régulateurs thermostatiques modifient la variable *CHyd.* Il existe donc un lien entre la température interne du bâtiment et la variable *CHyd.*

Mathématiquement, ce lien est exprimé sous la forme d'une fonction, notée f :

$$CHyd = f(Tint - Tconf) = f(\delta T) \ avec \ \delta T = Tint - Tconf$$

Cette fonction peut être approchée par une expression algébrique, s'appuyant sur un ensemble de paramètres. Pour la suite, nous supposons la forme suivante pour la fonction f (évolution linéaire saturée) :

- $$\delta T \geq \delta T_{max} \ \rightarrow CHyd = CHyd_{min}$$

- $$\delta T \leq \delta T_{min} \ \rightarrow CHyd = CHyd_{max}$$

- $$\delta T_{min} \leq \delta T \leq \delta T_{max} \rightarrow CHyd = CHyd_{min} - \frac{\delta T - \delta T_{max}}{\delta T_{max} - \delta T_{min}} \cdot (CHyd_{max} - CHyd_{min})$$

où $CHyd_{max}$ est la conductance hydraulique maximale, $CHyd_{min}$ la conductance hydraulique minimale et $\delta T_{max}$ et $\delta T_{min}$ les écarts de températures maximal et minimal à déterminer au moyen des données mesurées pendant la période de délestage.

Une estimation du paramètre $CHyd_{max}$ peut être simplement obtenue en prenant la valeur maximale de la conductance hydraulique mesurée dans le circuit hydraulique en fonctionnement normal. Dans l'exemple, la valeur est :

$$CHyd_{max} = 1,33 \ e - 6 \ kg.m.$$

Dans l'exemple considéré, lors de l'étape E1 de la première période, le module 133 de planification fixe la priorité au deuxième objectif qui consiste à faire varier le fonctionnement hydraulique du circuit de chauffage. Cette priorité est choisie car il est considéré que la corrélation entre la conductance hydraulique et l'écart à la température de confort n'est pas correctement établie.

Lors de l'étape E2 de la première période, le module 133 de planification détermine une consigne de délestage consistant à couper le chauffage pendant 16 heures continues, de 4h à 22h. Le modèle thermique dynamique du bâtiment permet, en effet, d'estimer qu'étant donné les conditions extérieures de température et d'ensoleillement, le bâtiment pourra se maintenir à une température proche de 20°C sans apport de chauffage. Dans ces conditions, la température de retour, notée $T_r$, mesurée par le capteur 302 en sortie du circuit hydraulique se stabilise naturellement à une valeur proche de la température intérieure du bâtiment.

Lors de l'étape E3 de la première période, le module 133 de planification transmet les consignes, pour la période de délestage de 16 heures, au module 134 de régulation de la puissance injectée. Ce module 134 commande au générateur d'énergie thermique 110 de n'injecter aucune puissance thermique dans le circuit de chauffage 200 pendant la durée définie de 16 heures, puis de repasser en mode de fonctionnement normal à la fin de cette durée.

Pendant cette durée de 16 heures, des données de températures du circuit de chauffage 200 sont collectées afin d'être analysées à l'étape E4 de la première période. Durant cette étape E4, le module 133 de planification estime l'évolution au cours du temps de l'écart à la température de confort à l'intérieur du bâtiment, en établissant une corrélation linéaire entre cet écart et la conductance hydraulique du circuit de chauffage 200. Les données de mesure sont analysées en ne conservant que les données pour lesquelles les conditions suivantes sont vérifiées :

- l'inéquation suivante est vérifiée : $0.2 \leq \dfrac{CHyd}{CHyd_{max}} \leq 0.9$ , et

- l'analyse est réalisée un certain temps au moins après l'instant où le chauffage a été coupé, par exemple au moins 5 heures après la coupure du chauffage.

Dans l'exemple, la détermination des paramètres recherchés peut être effectuée au moyen de la courbe de la figure 5. Cette courbe représente les données de mesures de la conductance hydraulique $CHyd$ du circuit de chauffage 200 ainsi que la régression linéaire par rapport à l'écart de température $T_r$ - $Tconf$, pour une hypothèse de $Tconf = 20°C$. Il faut rappeler que dans les conditions choisies la température de retour $T_r$ se stabilise à une valeur proche de la température intérieure du bâtiment. La pente de la régression linéaire vaut, dans l'exemple de la figure 5,

$\dfrac{CHyd_{max}}{\delta T_{min}} = -1{,}79\,e-6$ . On peut noter que la valeur de cette pente n'est pas dépendante de la température $Tconf$ considérée, et que celle-ci peut être estimée de manière à satisfaire la relation $\delta T = 0 \rightarrow CHyd = 0$. Dans notre cas, on peut estimer que $Tconf = 19{,}85\,°C$.

A l'aide de la pente calculée, on peut estimer le paramètre $\delta T_{min} = \dfrac{CHyd_{max}}{-1.79e-6} =$ -0.74 °C.

Dans cet exemple, les étapes E1 à E4 du procédé sont ensuite réitérées, pendant une deuxième période, avec un nouvel objectif. Lors de l'étape E1 de la deuxième période, le module 133 de planification choisit en priorité le premier objectif qui consiste à faire varier l'état thermique du bâtiment. Cet objectif est choisi car il est considéré que le modèle thermique du bâtiment n'est pas suffisamment précis.

Lors de l'étape E2 de la deuxième période, le module 133 de planification détermine une consigne de délestage consistant à réduire le chauffage pendant une période de 3 heures, de 4h à 7h du matin.

Lors de l'étape E3 de la deuxième période, le module 133 de planification transmet les consignes de délestage au module 134 de régulation. La consigne de délestage est alors appliquée au générateur d'énergie thermique 110 de 4h à 7h du matin.

Lors de l'étape E4 de la deuxième période, le module 133 de planification analyse les données pour améliorer le calibrage du paramètre de capacité thermique C du modèle thermique dynamique du bâtiment. Pour cela, on considère l'intégration du bilan de puissance depuis la coupure du chauffage (au temps $t = t_i$ ) jusqu'à atteindre l'écart de température $\delta T_{min}$ (au temps $t = t_f$) :

$$ I_{bat} \cdot \delta T_{min} = I_c \cdot \left[ T_c(t_f) - T_c(t_i) \right] - UA \cdot \int_{t_i}^{t_f} T_{int}^* - T_{ext}\, dt $$

où $T_{int}^*$ est la valeur de la température intérieure estimée à partir de la corrélation précédemment établie, par la relation $T_{int}^* = Tconf + \delta T$ et où $T_c$ représente la température moyenne du circuit de chauffage qui peut, par exemple, être définie par la relation $T_c = \dfrac{1}{2} \cdot (T_d + T_r)$ . Dans le présent exemple, la valeur estimée est : $I_{bat} = 2{,}31e7\ J/K$.

Dans cet exemple, les étapes E1 à E4 du procédé sont ensuite réitérées, pendant une troisième période, avec le troisième objectif. Lors de l'étape E1 de la troisième période, le module 133 de planification fixe le troisième objectif comme prioritaire, ce troisième objectif consistant à faire varier la charge au niveau du système de production d'énergie thermique 100. Cette priorité est donnée car il est considéré que le modèle de fonctionnement du bâtiment est suffisamment précis pour établir un modèle permettant d'optimiser les coûts de fonctionnement du système de chauffage.

Lors de l'étape E2 de la troisième période, le module 133 de planification détermine une consigne de délestage visant à optimiser le coût de fonctionnement du système de production d'énergie thermique. Cette consigne peut notamment être établie par la résolution d'un problème d'optimisation dont l'objectif est de minimiser la somme de trois termes suivants :

- L'intégrale sur un horizon d'anticipation $H_0$ (typiquement de 24 h) des coûts d'achat de la chaleur :

$$\int_{t}^{t+H_o}\left[c_{chauffage}(s) \cdot \Phi(s) \cdot ds\right]$$

- L'intégrale sur $H_0$ d'un cout d'inconfort thermique de surchauffe :

$$\int_{t}^{t+H_o}\left\{c_{surchauffe}(s) \cdot \left[\delta T(s) - \delta T^{cible}(s)\right]_{+} \cdot ds\right\}$$

- L'intégrale sur $H_0$ d'un cout d'inconfort thermique de souschauffe :

$$\int_{t}^{t+H_o}\left\{c_{souschauffe}(s) \cdot \left[\delta T^{cible}(s) - \delta T(s)\right]_{+} \cdot ds\right\}$$

Dans ces expressions, la notation $[X]_+$ est définie par : $[X]_+ = max[X; 0]$ et $\delta T^{cible}$ est la valeur cible pour $\delta T$ qui peut être défini par exemple comme :

$\delta T^{cibLe}$ = -1 $°C$ entre 23h30 et 05h30
$\delta T^{cible}$ = -0.5 $°C$ sinon.

Les coefficients $c_{surchauffe}$ et $c_{souschauffe}$ représentent les coûts (strictement positifs) de l'inconfort thermique. Une valeur par défaut pour ces coefficients est donnée par l'expression suivante :

$$c_{surchauffe} = c_{souschauffe} = \frac{\int_{t}^{t+H_o}\left[c_{chauffage}(s) \cdot ds\right]}{H_0} \cdot \frac{\Phi_{max}}{2 \, degC}$$

Le problème d'optimisation complet est construit de manière classique sous la forme d'un problème linéaire mixte, dont la solution minimise la fonction objectif définie ci-dessus sous un ensemble de contraintes définies en particulier par le modèle de fonctionnement du bâtiment.

Lors de l'étape E3 de la troisième période, le module de planification 133 transmet les consignes de délestage, pour les heures de délestage concernées, au module de régulation 134.

Lors de l'étape E4 de la troisième période, le module de planification 133 analyse les données pour améliorer éventuellement les modèles de fonctionnement du bâtiment et du système de chauffage.

Bien que décrit à travers un certain nombre d'exemples, variantes et modes de réalisation, le procédé de contrôle de la puissance thermique à injecter dans un système de chauffage selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

1. Procédé de contrôle d'une puissance thermique à injecter dans un système de chauffage hydraulique d'un bâtiment, ledit système de chauffage comportant un générateur d'énergie thermique (110), un circuit de chauffage hydraulique dans lequel circule un fluide caloporteur, un système de contrôle (130) apte à commander le générateur d'énergie thermique (110) et comprenant un module de calcul de puissance (131), un module de calcul de conductance hydraulique (132), un module (133) de planification de consignes de puissance à injecter et un module (134) de régulation de la puissance injectée, le procédé comportant une pluralité d'étapes, mises en oeuvre durant au moins une première période :

a) choix (E1), parmi différents modèles du système de chauffage dont un modèle liant la conductance hydraulique du circuit de chauffage calculée par le module de calcul de conductance hydraulique (132) et la température à l'intérieur du bâtiment

d'un modèle de fonctionnement ou d'optimisation du système de chauffage à améliorer et choix, parmi différents objectifs, d'un objectif adapté pour définir le modèle choisi,

b) détermination (E2), par le module de planification (133), de consignes de fonctionnement permettant de répondre à l'objectif choisi à l'étape a),

c) transmission (E3) des consignes de fonctionnement au module de régulation (134), application de ces consignes pendant toute la période et collecte de données de fonctionnement par les modules de calcul de puissance (131) et de conductance hydraulique (132),

d) analyse (E4), par le module de planification (133), des données collectées pendant la période pour corriger au moins un paramètre du modèle choisi à l'étape a) et définir un modèle de fonctionnement amélioré.

2. Procédé selon la revendication 1, **caractérisé en ce que** les étapes a) à d) sont réitérées pour au moins une deuxième période avec un deuxième objectif, différent de l'objectif de la première période, pour améliorer un modèle différent du modèle de la première période.

3. Procédé selon l'une quelconque des revendications 1 et 2, **caractérisé en ce que** l'objectif est choisi à l'étape a) parmi les objectifs suivants :

- premier objectif : faire varier un état thermique du bâtiment et estimer les paramètres d'un modèle thermique dynamique du bâtiment ;
- deuxième objectif : faire varier un fonctionnement hydraulique du système de chauffage et estimer une corrélation entre la conductance hydraulique du circuit et la température à l'intérieur du bâtiment ;
- troisième objectif : faire varier une charge au niveau du système de chauffage et optimiser les coûts de fonctionnement dudit système.

4. Procédé selon l'une quelconque des revendications 2 à 3, **caractérisé en ce que** l'ordre de mise en oeuvre des objectifs est choisi en fonction du modèle à améliorer prioritairement, le troisième objectif étant mis en oeuvre seul ou après le premier et/ou le deuxième objectifs.

5. Procédé selon l'une quelconque des revendications 1 à 4, **caractérisé en ce que** l'étape d) comporte une opération de corrélation à l'évolution de la conductance hydraulique du système de chauffage.

6. Système de chauffage hydraulique pour bâtiment comportant :

- un circuit de chauffage hydraulique (200) dans lequel circule un fluide caloporteur, ledit circuit de chauffage hydraulique reliant une pluralité d'émetteurs thermiques (210) contrôlés individuellement par un régulateur thermostatique (220),
- un générateur d'énergie thermique (110) assurant la circulation de l'énergie thermique au sein du circuit de chauffage hydraulique (200),

**caractérisé en ce qu'**il comporte en outre un système de contrôle (130) apte à mettre en oeuvre le procédé selon l'une quelconque des revendications 1 à 5, ledit système de contrôle (130) comprenant un module de calcul de puissance (131), un module de calcul de conductance hydraulique (132), un module (133) de planification de consignes de puissance à injecter et un module (134) de régulation de la puissance injectée.

7. Système de chauffage selon la revendication 6, **caractérisé en ce que** le module de planification (133) est connecté à au moins un capteur météorologique (305) apte à fournir des données météorologiques.

8. Système de chauffage selon la revendication 6 ou 7, **caractérisé en ce que** le module de planification (133) est connecté à au moins une source (306) d'informations météorologiques prévisionnelles.

9. Système de chauffage selon l'une quelconque des revendications 6 à 8, **caractérisé en ce que** le module de planification (133) est connecté à au moins une source (306) d'informations relatives à l'évolution des coûts de l'énergie thermique utilisée dans ledit système de chauffage.

10. Système de chauffage selon l'une quelconque des revendications 6 à 9, **caractérisé en ce que** le module de planification (133) est connecté, en entrée, au module de calcul de puissance (131) et au module (132) de calcul de conductance hydraulique et, en sortie, au module (134) de régulation de la puissance injectée.

11. Produit programme d'ordinateur comprenant des instructions qui conduisent le système de chauffage selon l'une quelconque des revendications 6 à 10 à exécuter les étapes du procédé selon l'une quelconque des revendications 1 à 5.

**Patentansprüche**

1. Verfahren zur Steuerung einer Wärmeleistung, die in ein hydraulisches Heizsystem eines Gebäudes eingespeist werden soll, wobei das Heizsystem einen Wärmeenergieerzeuger (110), einen hydraulischen Heizkreis, in dem ein Wärmeträgerfluid zirkuliert, und ein Steuersystem (130) umfasst, das in der Lage ist den Wärmeenergieerzeuger (110) zu steuern und ein Leistungsberechnungsmodul (131), ein Modul zur Berechnung des hydraulischen Leitwerts (132), ein Modul (133) zur Planung von einzubringenden Leistungssollwerten und ein Modul (134) zur Regelung der eingespeisten Leistung umfasst, wobei das Verfahren eine Vielzahl von Schritten umfasst, die während mindestens einer ersten Periode durchgeführt werden:

   a) Auswahl (E1) aus verschiedenen Modellen des Heizsystems, darunter ein Modell, das den hydraulischen Leitwert des Heizkreislaufs, der von dem Modul zur Berechnung des hydraulischen Leitwerts (132) berechnet wird, mit der Innentemperatur des Gebäudes eines Modells zum Betrieb oder zur Optimierung des zu verbessernden Heizsystems verbindet und Auswahl eines geeigneten Ziels aus verschiedenen Zielen, um das ausgewählte Modell zu definieren,
   b) Bestimmen (E2) durch das Planungsmodul (133) von Funktionsvorgaben, die es ermöglichen, das in Schritt a) gewählte Ziel zu erfüllen,
   c) Übertragen (E3) der Funktionsvorgaben an das Regelmodul (134), Anwendung dieser Vorgaben während der gesamten Periode und Sammlung von Betriebsdaten durch die Module zur Berechnung der Leistung (131) und des hydraulischen Leitwerts (132),
   d) Analyse (E4) durch das Planungsmodul (133) der während der Periode gesammelten Daten, um mindestens einen Parameter des in Schritt a) gewählten Modells zu korrigieren und ein verbessertes Betriebsmodell zu definieren.

2. Verfahren nach Anspruch 1, **dadurch gekennzeichnet, dass** die Schritte a) bis d) für mindestens eine zweite Periode mit einem zweiten Ziel, das sich von dem Ziel der ersten Periode unterscheidet, wiederholt werden, um ein Modell zu verbessern, das sich von dem Modell der ersten Periode unterscheidet.

3. Verfahren nach einem der Ansprüche 1 und 2, **dadurch gekennzeichnet, dass** das Ziel in Schritt a) aus den folgenden Zielen ausgewählt wird:

   - erstes Ziel: Variation des thermischen Zustands des Gebäudes und Schätzung der Parameter eines dynamischen thermischen Modells des Gebäudes;
   - zweites Ziel: Variation eines hydraulischen Betriebs des Heizsystems und Schätzen einer Korrelation zwischen dem hydraulischen Leitwert des Kreislaufs und der Temperatur im Inneren des Gebäudes;

   - -drittes Ziel: Variation eines Nutzungsgrads des Heizsystems und Optimierung der Betriebskosten dieses Heizsystems.

4. Verfahren nach einem der Ansprüche 2 bis 3, **dadurch gekennzeichnet, dass** die Reihenfolge der Umsetzung der Ziele in Abhängigkeit von dem vorrangig zu verbessernden Modell gewählt wird, wobei das dritte Ziel allein oder nach dem ersten und/oder zweiten Ziel umgesetzt wird.

5. Verfahren nach einem der Ansprüche 1 bis 4, **dadurch gekennzeichnet, dass** Schritt d) einen Korrelationsvorgang mit der Entwicklung des hydraulischen Leitwerts des Heizsystems umfasst.

6. Hydraulisches Heizsystem für Gebäude, das umfasst:

   - einen hydraulischen Heizkreislauf (200), in dem ein Wärmeträgermedium zirkuliert, wobei der hydraulische Heizkreislauf eine Vielzahl von Wärmestrahlern (210) verbindet, die einzeln durch einen thermostatischen Regler (220) gesteuert werden,
   - einen Wärmeenergiegenerator (110), der die Zirkulation der Wärmeenergie innerhalb des hydraulischen Heizkreislaufs (200) sicherstellt,

**dadurch gekennzeichnet, dass** es außerdem ein Steuersystem (130) umfasst, das geeignet ist, das Verfahren nach einem der Ansprüche 1 bis 5 durchzuführen, wobei das Steuersystem (130) ein Modul zur Berechnung der Leistung (131), ein Modul zur Berechnung des hydraulischen Leitwerts (132), ein Modul (133) zur Planung von Vorgaben für die einzuspeisende Leistung und ein Modul (134) zur Regelung der eingespeisten Leistung umfasst.

7. Heizsystem nach Anspruch 6, **dadurch gekennzeichnet, dass** das Planungsmodul (133) mit mindestens einem Wettersensor (305) verbunden ist, der in der Lage ist, Wetterdaten zu liefern.

8. Heizsystem nach Anspruch 6 oder 7, **dadurch gekennzeichnet, dass** das Planungsmodul (133) mit mindestens einer Informationsquelle (306) für Wettervorhersagen verbunden ist.

9. Heizsystem nach einem der Ansprüche 6 bis 8, **dadurch gekennzeichnet, dass** das Planungsmodul (133) mit mindestens einer Informationsquelle (306) über die Entwicklung der Kosten für die in dem Heizsystem verwendete Wärmeenergie verbunden ist.

10. Heizsystem nach einem der Ansprüche 6 bis 9, **dadurch gekennzeichnet, dass** das Planungsmodul (133) eingangsseitig mit dem Leistungsberechnungsmodul (131) und dem Modul (132) zur Berechnung des hydraulischen Leitwerts und ausgangsseitig mit dem Modul (134) zur Regelung der eingespeisten Leistung verbunden ist.

11. Computerprogramm mit Anweisungen, die das Heizsystem nach einem der Ansprüche 6 bis 10 dazu veranlassen, die Schritte des Verfahrens nach einem der Ansprüche 1 bis 5 auszuführen.

**Claims**

1. A method for controlling heat power to be injected into a hydraulic heating system of a building, said heating system including a heat energy generator (110), a hydraulic heating circuit in which a heat transfer fluid circulates, a control system (130) able to control heat energy generator (110) and comprising a power calculation module (131), a hydraulic conductance calculation module (132), a module (133) for planning power setpoints to be injected and a module (134) for regulating the power injected, the method comprising a plurality of steps, implemented during at least a first period:

  a) selecting (E1), from different models of the heating system including a model relating the hydraulic conductance of the heating circuit calculated by the hydraulic conductance calculation module (132) and the temperature inside the building, an operating or optimisation model of the heating system to be improved and selecting, from different objectives, of an objective adapted to define the model selected,
  b) determining (E2), by the planning module (133), operating setpoints enabling the objective chosen in step a) to be met,
  c) transmitting (E3) the operating setpoints to the regulation module (134), applying these setpoints throughout the period and collecting operating data by the power (131) and hydraulic conductance (132) calculation modules,
  d) analysing (E4), by the planning module (133), the data collected during the period to correct at least one parameter of the model selected in step a) and defining an improved operating model.

2. The method according to claim 1, **characterised in that** steps a) to d) are repeated for at least a second period with a second objective, different from the objective of the first period, to improve a model different from the model of the first period.

3. The method according to any of claims 1 and 2, **characterised in that** the objective is chosen in step a) from the following objectives:

  - first objective: varying a thermal state of the building and estimating the parameters of a dynamic thermal model of the building;
  - second objective: varying a hydraulic operation of the heating system and estimating a correlation between the hydraulic conductance of the circuit and the temperature inside the building;
  - third objective: varying a load at the heating system and optimising the operating costs of said system.

4. The method according to any of claims 2 to 3, **characterised in that** the order of implementation of the objectives is selected as a function of the model to be improved as a priority, the third objective being implemented alone or after the first and/or second objectives.

5. The method according to any of claims 1 to 4, **characterised in that** step d) includes an operation of correlating with the time course of the hydraulic conductance of the heating system.

6. A hydraulic heating system for a building including:

   - a hydraulic heating circuit (200) in which a heat transfer fluid circulates, said hydraulic heating circuit connecting a plurality of heat emitters (210) individually controlled by a thermostatic regulator (220),
   - a heat energy generator (110) ensuring circulation of heat energy within the hydraulic heating circuit (200),

   **characterised in that** it further includes a control system (130) able to implement the method according to any of claims 1 to 5, said control system (130) comprising a power calculation module (131), a hydraulic conductance calculation module (132), a module (133) for planning power setpoints to be injected and a module (134) for regulating the power injected.

7. The heating system according to claim 6, **characterised in that** the planning module (133) is connected to at least one weather sensor (305) able to supply weather data.

8. The heating system according to claim 6 or 7, **characterised in that** the planning module (133) is connected to at least one source (306) of forecast weather information.

9. The heating system according to any of claims 6 to 8, **characterised in that** the planning module (133) is connected to at least one source (306) of information relating to the time course of the costs of heat energy used in said heating system.

10. The heating system according to any of claims 6 to 9, **characterised in that** the planning module (133) is connected, at the input, to the power calculation module (131) and to the hydraulic conductance calculation module (132) and, at the output, to the module (134) for regulating the power injected.

11. A computer program product comprising instructions which cause the heating system according to any of claims 6 to 10 to execute the steps of the method according to any of claims 1 to 5.

**Fig.1**

**Fig.2**

**Fig.3**

**Fig.4**

**Fig.5**

**EP 3 650 762 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2021696 A
- EP 2649379 A
- FR 201663218
- FR 3061268 A1
- US 2015102120 A
- FR 1663218